Europäisches Patentamt

European Patent Office

Office européen des brevets

(11) Publication number : **0 492 908 A1**

# EUROPEAN PATENT APPLICATION

(21) Application number : 91311558.0

(22) Date of filing : 12.12.91

(51) Int. Cl.⁵ : **C08F 279/02, // (C08F279/02, 220:42)**

(30) Priority : 21.12.90 US 632272

(43) Date of publication of application :
01.07.92 Bulletin 92/27

(84) Designated Contracting States :
AT BE CH DE DK ES FR GB GR IT LI LU NL SE

(71) Applicant : THE STANDARD OIL COMPANY
200 Public Square, 7A
Cleveland, Ohio 44114-2375 (US)

(72) Inventor : Curatolo, Benedict S.
6830 Bryden Court
Valley View, Ohio 44125 (US)
Inventor : Wu, Muyen M.
155 Sunset Drive
Hudson, Ohio 44236 (US)
Inventor : Li, George S.
5095 Boulder Creek Drive
Solon, Ohio 44139 (US)

(74) Representative : Barlow, Michael Thomas et al
BP INTERNATIONAL LIMITED Patents &
Agreements Division Chertsey Road
Sunbury-on-Thames Middlesex TW16 7LN
(GB)

(54) Oxygen barrier property improvement for high nitrile polymers through modification with an elastomer.

(57) A process for forming high nitrile polymers is enhanced by the presence of an elastomer. In particular, these high nitrile polymers can include acrylonitrile/methacrylonitrile polymers with a high acrylonitrile content.

EP 0 492 908 A1

## BACKGROUND OF THE INVENTION

This invention relates to articles composed of elastomer modified resinous polymers of acrylonitrile (AN) and methacrylonitrile (MAN) and particularly to multiaxially oriented articles and more particularly to multiaxially oriented films of elastomer modified copolymers of acrylonitrile and methacrylonitrile.

Polyacrylonitrile (PAN) has excellent barrier properties, chemical resistance, rigidity, and heat resistance. Polymethacylonitrile (PMAN) also has desirable barrier properties, chemical resistance, and rigidity although they are not as good as those of PAN.

Elastomers are not very good barrier materials, accordingly it would be expected that elastomer modification of a barrier resin would worsen barrier performance of that resin. It has been discovered however, that the elastomer modified polymers of this invention maintain superior barrier qualities, and achieve increased flexibility. This increased flexibility makes these polymers excellent as packaging resins.

Copolymers if AN and MAN enhanced with an elastomer are formed to obtain the best properties of both PAN and PMAN with increased flexibility and good impact resistance A copolymer of these nitriles results in an article which maintains its excellent barrier properties, chemical resistance. and heat resistance, while desirable thermoplastic properties such as melt stability for melt processing are obtained in addition to the flexibility.

U.S. Patent No. 3,947,527 shows that an olefinically unsaturated nitrile, indene, and a preformed rubbery polymer can be polymerized to form compositions with good impact resistance, although the rubber negatively affects the article's barrier properties. US Patent No. 3,950,454 shows that an olefinically unsaturated nitrile, an ester of an olefinically unsaturated carboxylic acid, and indene in the presence of a preformed rubbery polymer can be polymerized to achieve improved impact resistance, however the barrier properties of the polymer article are reduced.

In this art, it is desirable to have a processable, stable acrylonitrile/methacrylonitrile copolymer system enhanced by an elastomer.

## SUMMARY OF THE INVENTION

Accordingly, it is a primary object of this invention to provide an improved process for making an acrylonitrile/methacrylonitrile copolymer which is enhanced by an elastomer.

It is a further object of this invention to provide new and improved elastomer modified AN/MAN copolymers containing greater than 20% AN, since AN has superior barrier properties. It is a further object of this invention to provide a new and improved process for forming elastomer modified AN/MAN copolymers having greater than 20% AN which are melt processable and stable. It is a further object of this invention to provide elastomer modified methacrylonitrile polymers which have excellent barrier characteristics.

Additional objects and advantages of the invention will be set forth in part in the description which follows and in part will be obvious from the description or may be learned by practice of the invention. The objects and advantages of the invention may be realized and obtained by means of the instrumentalities and combinations particularly pointed out in the appended claims.

To achieve the foregoing objects and in accordance with the purpose of the invention, as embodied and broadly described herein, the process of this invention comprises forming a viscous polymer by the polymerization, in the presence of an elastomer, of a mixture of methacrylonitrile and acrylonitrile, wherein the addition of the monomers throughout the reaction is such that the ratio of acrylonitrile to methacrylonitrile remains relatively constant throughout the reaction. This results in a relatively homogeneous final polymer composition including the elastomer wherein there are no long sequences of AN units or long sequences of MAN units, but a somewhat random ordering of these units in the polymer chain. Relatively constant means a ratio of monomers which achieves this somewhat random ordering.

By practicing this invention, processable and stable polymers can be formed from the polymerization of 100 parts by weight of (A) about 5 to 100 percent by weight methacrylonitrile, (B) about 0 to 95, preferably 20 to 90 percent, by weight acrylonitrile in the presence of (C) a rubbery polymer of polybutadiene or at least 50% by weight of a conjugated diene monomer selected from the group consisting of butadiene and isoprene and up to 50% by weight of at least one member selected from the group consisting of styrene, acrylonitrile, methacrylonitrile and ethyl acrylate.

Such polymers comprise 10 to 100, preferably 10 to 80, most preferably 25 to 50, percent by weight polymerised methacrylonitrile; 90 to 0, preferably 90 to 20, most preferably 75 to 50 percent by weight polymerised acrylonitrile and an elastomer.

## DETAILED DESCRIPTION OF THE INVENTION

While the invention will be described in connection with a preferred procedure, it will be understood that it is not intended to limit the invention to that procedure. On the contrary, it is intended to cover all alternatives, modifications and equivalents as may be included within the spirit and scope of the invention defined by the appended claims.

In accordance with the invention, a representative polymerization procedure, comprises contacting about 0.1% to 10% by weight of a suitable emulsifier or dispersing agent in an aqueous medium, about 0.01% to 5% by weight of a molecular weight modifier, about 0.01% to 5% by weight of an initiator, a mixture comprising 5 to 80 percent by weight methacrylonitrile monomers and 95 to 20 percent by weight acrylonitrile monomers, and from 1 to 50 parts by weight elastomer for each 100 parts by weight of the acrylonitrile and methacrylonitrile mixture. Preferably the elastomer is employed in the form of a latex. Preferably, 1 to 20 parts by weight elastomer is employed. The mixture is placed in a purged reaction vessel which has a means of agitation, such as stirring or shaking. Preferably, the reaction vessel and reactants are initially purged with an inert gas, more preferably the gas used is nitrogen or argon. The mixture is heated to a temperature in the range of 40°C to 80°C, preferably about 60°C. The mixture is continuously or intermittently agitated. Preferably, the mixture is continuously agitated. Preferably, a stirrer speed of about 200 rpm is used. The agitation is continued until polymerization has proceeded to the desired extent, usually 40% - 100% conversion. Preferably, the polymerization continues to at least 60% to 80% of completion.

In the foregoing polymerization reaction where both AN and MAN are used, the molar ratios of AN and MAN reactants must be carefully controlled throughout the reaction, because the monomers react at different rates. MAN reacts faster with propagating free radicals in this system than does AN which leads to excess MAN in the polymer and excess AN in the unreacted monomer mixture. If too great an excess of AN becomes present in the monomer mixture, long strings of acrylonitrile units may form. Long AN strings lead to unprocessable products. For this reason, in the practice of the present invention, the polymerization reaction requires either incremental or continuous addition of the reactants.

In one embodiment, the monomer reactants are added in various increments, 10% of the total monomer reactants as starting materials to initiate the reaction, and three remaining 30% portions at later periods in the reaction. Each of the additions comprises AN/MAN in amounts controlled in order to obtain the desired AN/MAN ratio in the final product. This procedure continues until all of the monomer reactants have been added. Once the final reactant addition is made, polymerization is typically complete to at least 40% to 75%. Of course, other reactant addition increments may be used.

In another embodiment, it is possible to add most of the reactants at the initiation of the reaction. As the reaction proceeds, more of the highly reactive MAN monomer is added. This technique functions to steady the resultant polymer homogeneity by maintaining the same monomer ratio throughout the reaction through matching MAN addition to the conversion rate to polymer in the proper proportion.

In the most preferred embodiment, both reactants are added based on tracking of the polymer conversion in the same amounts as they are removed from the monomer mixture by polymerization.

As can be seen from the above embodiments, the primary objective of any procedure is to maintain the desired final AN/MAN ration throughout the entire reaction. If the ratios become too unbalanced, MAN may polymerize into long strings and become used up from the monomer mixture, and the remaining AN may polymerize into long unpocessable strings. The identified procedures function to produce melt-processable AN/MAN copolymers with excellent physical properties, by preventing the formation of long AN strings.

The elastomer of the present invention consists of a rubbery polymer of polybutadiene or at least 50 percent by weight of a conjugated diene monomer selected from the group consisting of butadiene and isoprene and up to 50 percent by weight of at least one member selected from the group consisting of styrene, acrylonitrile, methacrylonitrile, or ethyl acrylate.

The molecular weight modifier may include mercaptans, alcohols, or any other chain transfer agents. Mercaptans are preferred. The free radical initiator may include Azo compounds, peroxides, hydroperoxides, alkyl peroxides, peroxydicarbonates, peroxyesters, dialkyl peroxides, persulfates, perphosphates, or any other initiator known to those skilled in the art. Of course, the reaction may be initiated by another means such as thermal initiation.

At the conclusion of the reaction, the polymer of this invention may be isolated as a finely divided powder by crumb coagulation.

The crumb coagulation procedure consists of adding the product emulsion to an appropriate electrolyte solution with rapid agitation at a temperature just below the point at which the precipitated particles tend to adhere. This procedure yields a polymer in a form of granules or particles which are filtered and washed. Suitable electrolytes include sodium chloride, sodium sulfate, hydrochloric acid, phosphoric acid, calcium chloride, magnesium sulfate and aluminium sulfate which is preferred. After precipitation, the polymer is filtered and washed repeatedly with water to minimize traces of electrolyte and dispersing agent which may adhere to the particles. Washing with dilute solutions of caustic soda or ammonium hydroxide may assist in removing the last traces of dispersing agent, and at the same time yield polymers of improved heat stability. It is also beneficial to employ a final wash of an organic solvent such as a lower aliphatic alcohol (methanol or ethanol) to remove any residual soap or impurities.

Other means for isolating the polymer include spraying the solution into a heated and/or evacuated chamber where the water vapors are removed and the polymer falls to the bottom of the chamber. If the polymer is prepared with sufficiently high solids content it can be isolated as a granular powder by filtration or centrifugation. The polymer may also be isolated by cooling the dispersion below the freezing pointy of the aqueous medium or by the addition of a large volume of a lower aliphatic alcohol such as methanol or ethanol.

If desirable, lubricants, dyes, bleaching agents, plasticizers or pseudoplasticizers, pigments, stabilizers, antioxidants, reinforcing agents (including fillers and fibres) and antistatic agents may be incorporated into a polymer of this invention.

The polymers of this invention can be formed into films having extremely good barrier properties. Particularly, the oxygen transmission rate of films of this invention are generally below 0.30 (cc mil/100in$^2$ atm - 24 hr). Preferably, the oxygen transmission rate is below 0.10 (cc mil/100in$^2$ atm - 24 hr). Most preferably the oxygen transmission rate is below 0.05 (cc mil/100in$^2$ atm - 24 hr). The water vapour transmission rate is generally below 3.25 (g - mil/100in$^2$ - 24 hr). Preferably, the water vapour transmission rate is below 3.00 (g - mil/100in$^2$ - 24 hr). Most preferably, the water vapour transmission rate is below 2.00 (g - mil/100in$^2$ - 24 hr).

The films of this invention may be prepared by solvent casting or preferably by a solvent free process eg a thermal forming procedure such an extrusion, injection molding, compression molding or calendering, however, for economic reasons and for ease in processing it is most preferred that the polymer be extruded. The polymers of this invention may be extruded from any conventional type extruder at a temperature of about 160°C to 250°C. Preferably, the extrusion is at about 200°C to 220°C. A screw-type extruder employing an annular die to form a thin walled polymer cylinder or sheet die to form a continuous sheet may be used.

The polymes of this invention are particularly suitable for packaging in food containers, and possess a suitability for high temperature applications.

The polymers of this invention are also suitable for forming fibres. This can be accomplished by solution spinning or by a solvent free process such as melt spinning using procedures known to those skilled in the art.

Because the elastomer modified AN/MAN copolymer and the elastomer modified MAN polymer are thermoplastic, they can be oriented as solvent-free materials. This is an advantage because the presence of any solvent in the polymer makes orientation difficult and adversely affects the barrier properties of the polymer. In addition to an elastomer modified AN/MAN system, PMAN modified by an elastomer demonstrates improved barrier properties.

## EXAMPLES

Copolymers of elastomer modified acrylonitrile/methacrylonitrile and elastomer modified methacrylonitrile polymers were prepared by means of emulsion polymerization according to the following general procedures.

### Samples 1-3 and 5-9

A two liter reactor containing 900g of deionized water was used. 9g of GAFAC RE-610 was dissolved in the water overnight. Elastomer latex in an amount dependent upon the desired final elastomer content was added. Butadiene/acrylonitrile was the elastomer used. Acrylonitrile and methacrylonitrile totalling 300g (the specific ratio dependent on the final product desired) were added. 10% of the monomers were charged to the reactor. The initiator (1.5g VAZO 52) was added when the reaction mass reached 60° C. 30% of the monomers were added continuously in each of three 90 minute periods. N-dodecyl mercaptan (6.0 grams in three 2.0 gram additions) was added to the reactants before each 90 minute monomer addition stage. The reactants and reactor were nitrogen purged. The reaction temperature was 60° C with a stirrer speed of 200rpm. At the end of the reaction time, (40-80% conversion of monomers to polymers) the products were isolated by crumb-coagulation in an aluminum sulfate solution at 77° C, water washed, methanol soaked, filtered, and fluid bed dried. The oxygen transmission rate and water vapor transmission rate results of films having different AN:MAN ratios and a variety of rubber contents can be seen in Table 1.

GAFAC RE-610 is a mixture of R-O-(CH$_2$CH$_2$O-)$_n$PO$_3$M$_2$ and [R-O-(CH$_2$CH$_2$O-)$_n$]$_2$PO$_2$M wherein n is a number of from 1 to 40, R is an alkylaryl or alkyl group and preferably a nonyl phenyl group and M is hydrogen, ammonia or an alkali metal. It is sold by the General Aniline and Film Corporation.

Sample 4

231.4 grams of AN and 68.6 grams of MAN were added at the beginning of the reaction. An additional 13.6 grams of MAN were added in each of three 90 minute stages of the reaction to compensate for its higher conversion rate and to maintain the initial monomer feed ratio in the reactor. 6g of N-dodecyl mercaptan were added in three 2g installments, just prior to each of the three 90 minute monomer addition periods. 1.5g of VAZO 52 initiator were added when the reaction mass reached 60° C.

Samples 10-12

The same procedure as in samples 1-3 and 5-9 was used, however, acrylonitrile was not added.

TABLE 1

| Sample | Rubber Parts | Polymer AN/MAN Ratio (Mole %) | grams of AN/MAN added | O.T.R. (cc-mil/100in$^2$ atm-24hr) | WVTR (g-mil/100in$^2$ 24hr) |
|---|---|---|---|---|---|
| 1 | 0 | 72.4/27.6 | 211.0/89.0 | 0.03 | 0.618 |
| 2 | 6 | 71.9/28.1 | 211.0/89.0 | 0.04 | 1.275 |
| 3 | 9.5 | 69.8/30.2 | 211.0/89.0 | 0.02 | 1.157 |
| 4 | 0 | 65.1/34.9 | 231.4/109.4 | 0.03 | 1.735 |
| 5 | 6 | 60.4/39.6 | 183.9/116.1 | 0.01 | 1.348 |
| 6 | 13.5 | 62.9/37.1 | 183.9/116.1 | 0.01 | 2.384 |
| 7 | 0 | 38.7/61.3 | 126.6/173.4 | 0.30 | 3.770 |
| 8 | 5 | 37.3/62.7 | 126.6/173.4 | 0.03 | 3.450 |
| 9 | 9 | 37.1/62.9 | 126.6/173.4 | 0.02 | 3.940 |
| 10 | 0 | 0/100 | 0/300.0 | 0.33 | 2.514 |
| 11 | 5 | 0/100 | 0/300.0 | 0.05 | 3.287 |
| 12 | 10 | 0/100 | 0/300.0 | 0.08 | 2.885 |

Each of the examples showed good melt processability. In addition, the elastomer modified polymers showed lower flexural modulus values than the corresponding non-elastomer modified polymers. Furthermore, the polymers showed high glass transmission temperatures which indicate suitability for high temperature applications. Many of the polymers, including those formed from only MAN. showed increased barrier resistance with the addition of the elastomer in addition to the flexural improvements.

## Claims

1. A process for making a viscous melt processable polymer consisting essentially of polymerized acrylonitrile and methacrylonitrile onto an elastomer backbone, the process comprising polymerizing a mixture of methacrylonitrile monomers and acrylonitrile monomers in the presence of an elastomer, wherein the addition of methacrylonitrile and acrylonitrile monomers to the mixture is controlled throughout the reaction so that the ratio of unreacted acrylonitrile to unreacted methacrylonitrile monomers in the mixture is relatively constant during the reaction.

2. The process of claim 1, wherein said methacrylonitrile monomers comprise 5 to 80 percent by weight of said mixture, said acrylonitrile monomers comprise 95 to 20 percent by weight of said mixture, and said elastomer comprises 1 to 50 parts by weight for each 100 parts of said monomer mixture.

3. The process of claim 1, wherein said monomers are added in stages throughout the reaction.

4. The process of claim 1, wherein an amount of said monomers necessary to initiate the reaction is present in the mixture at the start of the reaction and additional methacrylonitrile is added during the reaction.

5. The process of claim 1, wherein said polymer is formed into a film.

6. The process of claim 1, wherein said polymer is formed into a fibre.

7. The process of claim 5, wherein said film is formed by a solvent free process.

8. The process of claim 6, wherein said fibre is formed by a solvent free process.

9. A polymer comprising 10 to 100 percent by weight polymerized methacrylonitrile, 90 to 0 percent by weight polymerized acrylonitrile, and an elastomer.

10. The polymer of claim 9, wherein said polymerized methacrylonitrile is 10 to 80 percent by weight and said polymerized acrylonitrile is 90 to 20 percent by weight.

11. The polymer of claim 10, wherein said polymerized methacrylonitrile comprises 25 to 50 percent by weight and said polymerized acrylonitrile comprises 75 to 50 percent by weight.

12. The polymer of claim 9, having an oxygen transmission rate less than 0.10 cc mil/100in$^2$ atm-24 hr.

13. The polymer of claim 9, having a water vapour transmission rate less than 2.00 g-mil/100in$^2$ -24hr.

14. A film having the composition of claim 9.

15. A fibre having the composition of claim 9.

16. The polymeric composition resulting from the polymerization of 100 parts by weight of (a) from 5 to 100 percent by weight methacrylonitrile, and (b) from 0 to 95 percent by weight acrylonitrile, in the presence of a rubbery polymer of polybutadiene or at least 50% by weight of a conjugated diene monomer selected from the group consisting of butadiene and isoprene and up to 50% by weight of at least one monomer selected from the group consisting of styrene, acrylonitrile, methacrylonitrile and ethyl acrylate.

17. The composition of claim 16, wherein (b) is from 20 to 90 percent by weight acrylonitrile.

18. The polymeric composition of claim 16, wherein said rubbery polymer comprises 1 to 50 parts by weight for each 100 parts by weight of (a) and (b).

19. The polymeric composition of claim 16, wherein said rubbery polymer comprises 1 to 20 parts by weight fo each 100 parts by weight of (a) and (b).

European Patent
Office

# EUROPEAN SEARCH REPORT

Application Number

EP 91 31 1558

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | US-A-3 975 461 (YAMAWAKI ET AL)<br>* column 1, line 46 - line 56 *<br>* column 3, line 37 - line 41; claims * | 1-19 | C08F279/02<br>//( C08F279/02,<br>220:42) |
| A | GB-A-1 380 713 (THE INTERNATIONAL SYNTHETIC RUBBER COMPANY LIMITED)<br>* claim 1 * | 1-19 | |
| A | FR-A-2 078 923 (IMPERIAL CHEMICAL INDUSTRIES LIMITED)<br>* page 2, line 9 - line 15; claim 1 * | 1-19 | |
| A | CHEMICAL ABSTRACTS, VOL.85, N04, 26 JULY 1976, PAGE 31, ABSTRACT 22256V, COLUMBUS, OHIO, US;<br>& JP-A- 76 09,140 (KANEGAFUCHI CHEMICAL INDUSTRY CO., LTD) 24 JAN 1976<br>* ABSTRACT * | 1-19 | |
| | | | **TECHNICAL FIELDS SEARCHED (Int. Cl.5 )**<br><br>C08F |

The present search report has been drawn up for all claims

| Place of search | Date of completion of the search | Examiner |
|---|---|---|
| THE HAGUE | 07 APRIL 1992 | IRAEGUI RETOLAZA E. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................

& : member of the same patent family, corresponding document

EPO FORM 1503 03.82 (P0401)